# FASCICULE DE BREVET EUROPEEN

(11) **EP 4 527 690 B1**
(45) Date de publication et mention de la délivrance du brevet: **17.12.2025**
(21) Numéro de dépôt: 24195538.4
(22) Date de dépôt: 21.08.2024
(51) Int. Cl.: B60P 7/13, B65D 88/12

(54) **CARROSSERIE POUR VÉHICULE ROUTIER DE TRANSPORT DE MARCHANDISES ÉQUIPÉE DE SYSTÈME DE BRIDAGE**
KAROSSERIE FÜR EIN STRASSENFAHRZEUG ZUM TRANSPORT VON GÜTERN MIT EINEM SPANNSYSTEM
BODY FOR A ROAD VEHICLE FOR TRANSPORTING GOODS, PROVIDED WITH A CLAMPING SYSTEM

(30) Priorité: 21.09.2023 FR 2310024
(43) Date de publication de la demande: 26.03.2025
(73) Titulaire: Jean Chereau SAS, 50220 Ducey (FR)
(72) Inventeur: COURTEILLE, Benoit, 50300 AVRANCHES (FR); BELLOIR, Jimmy, 50220 DUCEY-LES-CHERIS (FR); GAVARD, Jean-Marc, 50870 LE PARC (FR)
(74) Mandataire: Casalonga

(56) Documents cités:
- EP-A1- 2 995 535
- WO-A1-2023/033529
- DE-C2- 4 412 085
- KR-U- 19980 031 870
- US-A1- 2018 194 405
- US-A1- 2022 161 854

## Description

La présente invention concerne le domaine des véhicules routiers de transport de marchandises tels que des porteurs, des semi-remorques ou des remorques.

Un véhicule routier de transport de marchandises comprend un châssis et une carrosserie montée sur le châssis et délimitant un espace de chargement intérieur. Le châssis comprend généralement deux longerons longitudinaux et une pluralité de traverses s'étendant transversalement entre les longerons. On parle généralement de châssis de type échelle.

Un véhicule routier de transport de marchandises du type porteur comprend en outre un châssis cadre auxiliaire appelé généralement « faux-châssis » qui prend appui sur le châssis et sur lequel vient se fixer la carrosserie.

La liaison entre le châssis, le châssis cadre auxiliaire et la carrosserie est réalisée par vissage et bridage. Les vis permettant de réaliser cet assemblage sont orientées verticalement. Le document US 2018/194405 A1 divulgue une carrosserie de véhicule routier de transport de marchandises connue dans l'état de la technique.

Lors de l'assemblage de la carrosserie avec le châssis cadre auxiliaire, l'accès à ces vis est assez difficile pour les opérateurs.

Par ailleurs, pour un véhicule routier de transport de marchandises du type semi-remorque ou remorque, il se pose également le problème d'accès aux vis permettant de réaliser l'assemblage du châssis et de la carrosserie.

En outre, sur les véhicules à propulsion électrique, les batteries parfois volumineuses sont positionnées latéralement au châssis. L'accès aux vis est ainsi rendu encore plus difficile. De plus, les risques électriques qui existent à proximités des vis, compte tenu de la présence de câbles de puissance, de connecteurs et des batteries, peuvent amener à appliquer des règles de sécurité contraignantes, par exemple du personnel habilité ou encore une mise hors tension des batteries.

La présente invention vise à remédier à ces inconvénients.

L'invention a pour objet une carrosserie de véhicule routier de transport de marchandises comprenant deux flancs verticaux, un pavillon et un plancher assemblés entre eux et délimitant en partie un espace de chargement intérieur, et une pluralité de systèmes de bridage fixés au plancher verticalement du côté opposé à l'espace de chargement pour fixer la carrosserie à un châssis.

Selon une caractéristique générale, chaque système de bridage est pourvu d'une embase fixée au plancher de la carrosserie, et d'un moyen de blocage monté mobile sur l'embase entre au moins une position inactive et une position active de blocage de la carrosserie sur le châssis et pourvu d'une surface de contact avec ledit châssis.

Selon une autre caractéristique générale, chaque système de bridage est pourvu en outre d'un moyen d'actionnement s'étendant transversalement, en contact avec le moyen de blocage et monté mobile sur l'embase pour permettre le déplacement de la position inactive vers la position active de blocage dudit moyen de blocage, et inversement.

Le sens « transversal » est utilisé en considérant le sens de la largeur de la carrosserie.

Avec un tel système de bridage, l'actionnement peut être réalisé latéralement par un opérateur, ce qui permet de pouvoir assembler aisément la carrosserie avec le châssis associé en restant à distance des zones où les risques électriques existent.

Le moyen d'actionnement est espacé verticalement vers le bas par rapport au plancher.

Le moyen d'actionnement de chaque système de bridage s'étend selon un axe d'allongement transversal, le moyen d'actionnement étant monté mobile sur l'embase le long dudit axe d'allongement.

Le moyen d'actionnement est monté mobile sur l'embase au moins en translation le long dudit axe d'allongement.

Selon une conception, le moyen d'actionnement est monté mobile sur l'embase en translation et en rotation le long dudit axe d'allongement.

Selon une autre conception, le moyen d'actionnement est monté mobile sur l'embase uniquement en translation le long dudit axe d'allongement.

Selon une conception, le moyen de blocage de chaque système de bridage est monté mobile à rotation sur l'embase autour d'un axe géométrique s'étendant longitudinalement.

Le sens « longitudinal » est utilisé en considérant le sens de la longueur de la carrosserie.

Selon une conception alternative, le moyen de blocage de chaque système de bridage est monté mobile en translation transversalement le long de l'embase.

De préférence, le moyen d'actionnement de chaque système de bridage coopère avec l'embase par vissage. Dans ce cas, le moyen d'actionnement peut comprendre une vis.

De préférence, le moyen d'actionnement de chaque système de bridage s'étend transversalement en saillie vers l'extérieur par rapport à l'embase en direction d'un des flancs vertical. De préférence, le moyen d'actionnement reste en retrait transversalement par rapport audit flanc vertical. Autrement dit, le moyen d'actionnement ne s'étend pas en saillie vers l'extérieur par rapport audit flanc vertical.

Avantageusement, le moyen d'actionnement est décalé verticalement vers le bas par rapport au plancher. De préférence, le moyen d'actionnement est avantageusement entièrement décalé verticalement vers le bas par rapport au plancher.

L'invention a également pour objet un véhicule routier de transport de marchandises comprenant un châssis s'étendant longitudinalement et supportant au moins un essieu équipé de roues, un châssis cadre auxiliaire fixé sur le châssis, et une carrosserie telle que définie précédemment et fixée sur le châssis cadre auxiliaire.

La surface de contact du moyen de blocage de chaque système de bridage peut-être, dans la position active de blocage, en contact contre un longeron du châssis cadre auxiliaire, notamment contre une aile latérale dudit longeron.

L'invention a encore pour objet un véhicule routier de transport de marchandises comprenant un châssis s'étendant longitudinalement et supportant au moins un essieu équipé de roues, et une carrosserie telle que définie précédemment et fixée sur le châssis.

La surface de contact du moyen de blocage de chaque système de bridage est, dans la position active de blocage, en contact contre un longeron du châssis, notamment contre une aile latérale dudit longeron du châssis.

La présente invention sera mieux comprise à la lecture de la description détaillée de modes de réalisation pris à titre d'exemples nullement limitatifs et illustrés par les dessins annexés sur lesquels :
[Fig 1] est une vue en perspective d'un porteur selon un exemple de réalisation,
[Fig 2] est une vue de détail de la figure 1,
[Fig 3] est une vue de détail de la figure 1 sur laquelle des systèmes de bridage de la carrosserie sont représentés dans une position inactive,
[Fig 4] est une vue en coupe selon l'axe IV-IV de la figure 2,
[Fig 5] est une vue en coupe selon l'axe V-V de la figure 3,
[Fig 6]

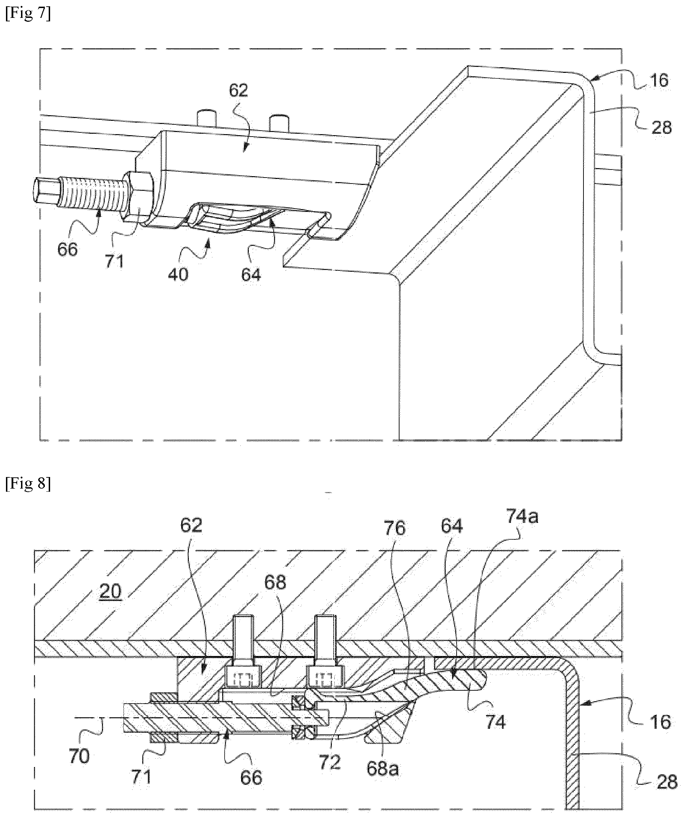

[Fig 7] sont des vues en perspective d'un système de bridage pour carrosserie selon un autre exemple de réalisation,
[Fig 8] et

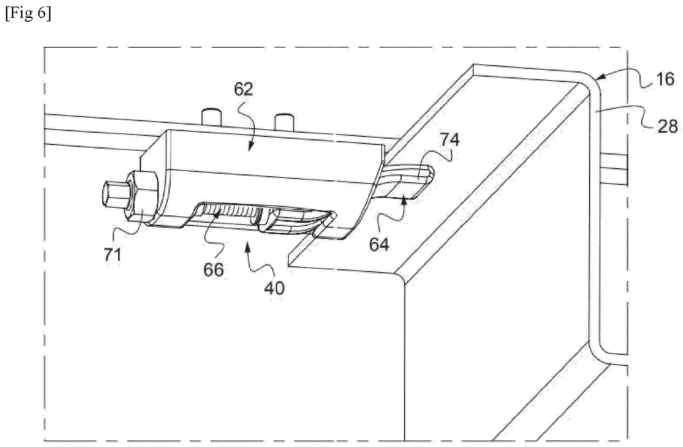

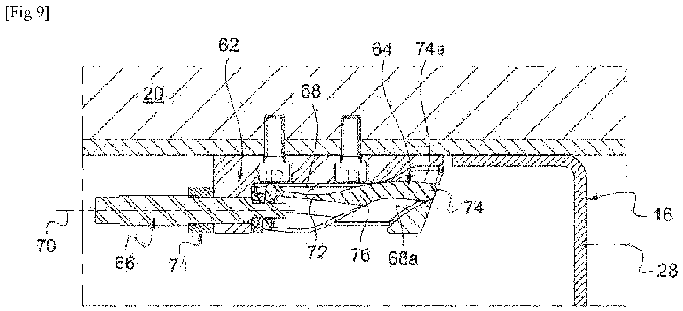

[Fig 9] sont des vues en coupe du système de bridage des figures 6 et 7.

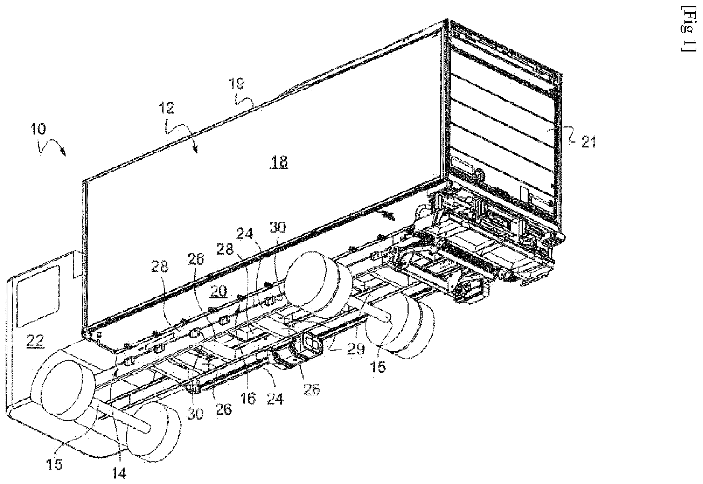

Sur la figure 1, on a représenté un porteur, référencé 10 dans son ensemble, comprenant une carrosserie 12 et un châssis 14 porteur sur lequel est montée la carrosserie et supportant une pluralité d'essieux 15 équipés chacun de roues (non référencées). Sur la figure, les essieux sont représentés de manière schématique.

Comme cela sera décrit plus en détail par la suite, le porteur 10 comprend également un châssis cadre auxiliaire 16 interposé verticalement entre la carrosserie 12 et le châssis 14. Le châssis cadre auxiliaire 16 est appelé généralement « faux-châssis ».

La carrosserie 12 comprend deux flancs 18 verticaux opposés s'étendant longitudinalement (un seul étant visible sur la figure), un plafond ou pavillon 19, un fond ou plancher 20 et une face avant (non visible) qui sont assemblés entre eux pour délimiter un espace de chargement intérieur. Les flancs 18 sont identiques et symétriques l'un par rapport à l'autre en considérant un plan vertical médian longitudinal de la carrosserie.

La carrosserie 12 comprend également un rideau coulissant 21 pour permettre l'accès à l'espace de chargement intérieur de l'arrière. Alternativement, la carrosserie 12 peut comprendre une ou des portes arrière articulées chacune à rotation pour permettre l'accès à l'espace de chargement intérieur. Alternativement, la carrosserie 12 peut comprendre une porte articulée à rotation sur un des flancs 18.

Le porteur 10 comprend également un tracteur 22 solidaire du châssis 14 et équipé d'un moteur à propulsion.

De manière connue en soi, le châssis 14 comprend deux longerons 24 longitudinaux espacés dans le sens transversal et s'étendent longitudinalement, et une pluralité de traverses 26 s'étendent transversalement par rapport aux longerons 24 et fixées sur ceux-ci.

De manière également connue en soi, le châssis cadre auxiliaire 16 présente une structure similaire au châssis 14. Le châssis cadre auxiliaire 16 comprend deux longerons 28 longitudinaux espacés dans le sens transversal et s'étendent longitudinalement, et une pluralité de traverses 29 s'étendent transversalement par rapport aux longerons 28 et fixées sur ceux-ci. Chaque longeron 28 du châssis cadre auxiliaire est verticalement en appui contre un des longerons 24 du châssis 14.

Le châssis cadre auxiliaire 16 est fixé au châssis 14 et au plancher 20 de la carrosserie.

Pour réaliser la fixation du châssis cadre auxiliaire 16 au châssis 14, une pluralité de supports 30 sont respectivement fixés sur les longerons 24 et les longerons 28 verticalement l'un en dessous de l'autre. Sur la figure 1, les supports fixés sur les longerons 28 du châssis cadre auxiliaire ne sont pas représentées. Une pluralité de vis (non représentées) s'étendant verticalement est prévue pour fixer les supports 30 deux à deux. Alternativement, il pourrait être possible de prévoir d'autre moyens de fixation démontables pour assurer la fixation du châssis cadre auxiliaire 16 au châssis 14.

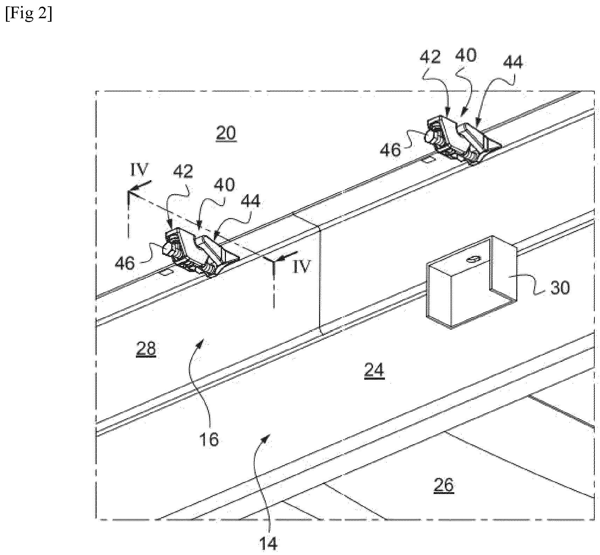

Comme illustré plus visiblement à la figure 2, pour réaliser la fixation du châssis cadre auxiliaire 16 au plancher 20 de la carrosserie, celle-ci est pourvue d'une pluralité de systèmes de bridage 40 qui sont fixés au plancher 20. Les systèmes de bridage 40 sont associés aux longerons 28 du châssis cadre auxiliaire. Les systèmes de bridage 40 sont identiques entre eux.

Pour chaque longeron 28 est prévue une pluralité de systèmes de bridage 40 qui sont espacés les uns par rapport aux autres dans le sens longitudinal. Les systèmes de bridage 40 sont fixés au plancher 20 verticalement du côté opposé à l'espace de chargement, et du côté extérieur au longeron 28 associé en considérant le sens transversal.

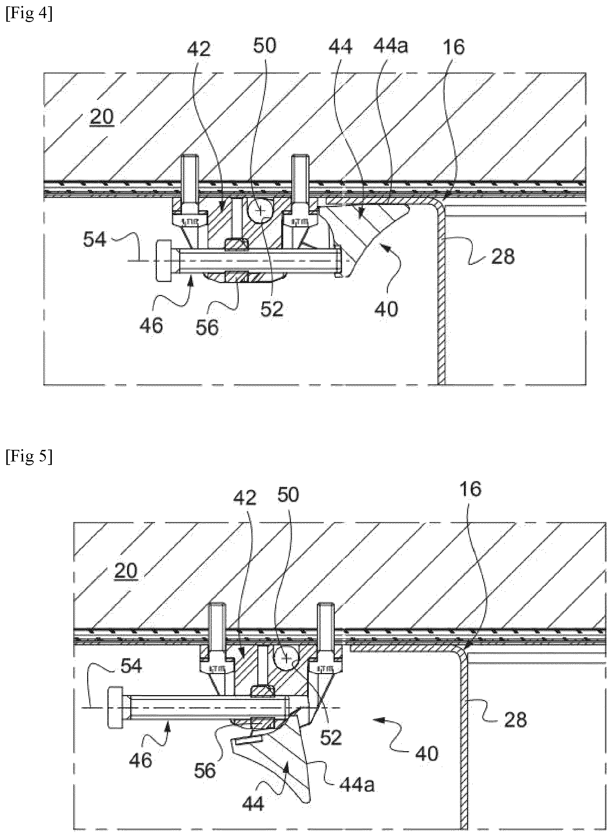

Chaque système de bridage 40 comprend une embase 42 fixée au plancher 20, et un moyen de blocage 44 monté mobile à rotation sur l'embase 42 entre une pluralité de positions inactives et une position active de blocage de la carrosserie relativement au châssis cadre auxiliaire 16. Chaque système de bridage 40 comprend également un moyen d'actionnement 46 pour permettre le déplacement du moyen de blocage 44. Le moyen de blocage 44 est mobile à rotation autour d'un axe 50 géométrique (figure 4) s'étendant longitudinalement. Le moyen d'actionnement 46 est situé sous le plancher 20. Autrement dit, le moyen d'actionnement 46 est décalé verticalement vers le bas par rapport au plancher 20.

Comme cela sera décrit plus en détail par la suite, dans sa position active le moyen de blocage 44 assure la retenue de la carrosserie relativement au châssis cadre auxiliaire 16 par serrage contre le cadre auxiliaire, plus précisément contre le longeron 28 associé dudit cadre auxiliaire.

L'embase 42 est fixée au plancher 20 de la carrosserie par tout moyen approprié. Dans l'exemple de réalisation illustré, l'embase 42 est fixée au plancher 20 par l'intermédiaire de vis (non référencées). Alternativement ou en combinaison, il est possible de prévoir d'autres moyens de fixation par exemple des goupilles, des goujons, de la colle etc.

Comme illustré à la figure 4, l'embase 42 est pourvue d'un logement 52 concave pour le montage à rotation du moyen de blocage 44. Le logement 52 forme une portée pour le support du moyen de blocage 44 et pour autoriser sa rotation. Le logement 52 est ici ouvert dans le sens vertical du côté du plancher 20.

Le moyen d'actionnement 46 s'étend transversalement. Le moyen d'actionnement 46 s'étend selon un axe d'allongement 54 transversal. Le moyen d'actionnement 46 s'étend ici transversalement en saillie vers l'extérieur par rapport à l'embase 42. Le moyen d'actionnement 46 s'étend transversalement en saillie vers l'extérieur par rapport à l'embase 42 en direction d'un des flancs 18 en restant en retrait par rapport audit flanc. Le moyen d'actionnement 46 est accessible depuis l'extérieur de la carrosserie. Le moyen d'actionnement 46 est monté mobile sur l'embase 42. Le moyen d'actionnement 46 est monté mobile sur l'embase le long de l'axe d'allongement 54.

Dans l'exemple de réalisation illustré, le moyen d'actionnement 46 est une vis filetée. Ainsi, le moyen d'actionnement 46 est ici mobile à rotation et en translation par rapport à l'embase 42. Chaque système de bridage 40 comprend aussi un écrou 56 monté sur l'embase 42 et en prise avec le filetage du moyen d'actionnement 46. Alternativement, il pourrait être possible de prévoir directement sur l'embase 42 le taraudage coopérant avec le filetage du moyen d'actionnement 46.

L'extrémité libre du moyen d'actionnement 46, qui est située transversalement du côté du châssis cadre auxiliaire 16, est en appui contre le moyen de blocage 44. Le moyen d'actionnement 46 permet d'obtenir la rotation du moyen de blocage 44 entre une pluralité de positions inactives (dont l'une est illustré à la figure 5) dans laquelle une surface de contact 44a du moyen de blocage reste à distance du châssis cadre auxiliaire 16, et une position active dans laquelle la surface de contact 44a du moyen de blocage est en appui contre le châssis cadre auxiliaire 16 comme illustré à la figure 4.

Le moyen de blocage 44 se présente sous la forme d'un levier articulé autour de l'axe 50. Dans la position active, la surface de contact 44a du moyen de blocage est en appui dans le sens vertical contre le longeron 28 associé du châssis cadre auxiliaire 16. Le moyen de blocage 44 est serré contre le longeron 28 associé. La surface de contact 44a vient en appui contre une aile latérale du longeron 28 associé. Dans sa position active, le moyen de blocage 44 est situé verticalement sous l'aile latérale du longeron 28 associé.

Pour réaliser l'assemblage de la carrosserie 12 sur le châssis cadre auxiliaire 16, on procède de la manière suivante.

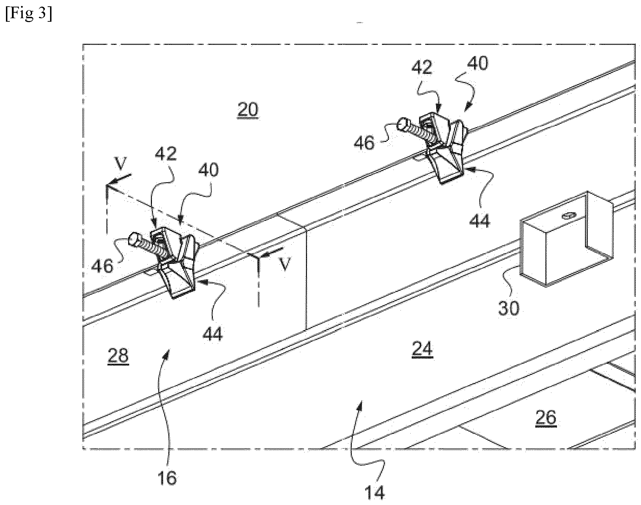

Dans une première étape, on fixe les systèmes de bridage 40 au plancher 20 de la carrosserie. Le moyen d'actionnement 46 de chaque système de bridage est positionné relativement à l'embase 42 associée de sorte que le moyen de blocage 44 s'étende verticalement dans le prolongement de celle-ci comme illustré aux figures 3 et 5.

Ensuite, dans une deuxième étape, on amène le plancher 20 de la carrosserie en appui contre le châssis cadre auxiliaire 16. Le plancher 20 est en appui contre les longerons 28 du châssis cadre auxiliaire 16.

Puis, dans une troisième étape, on visse le moyen d'actionnement 46 de chaque système de bridage pour amener la surface de contact 44a du moyen de blocage en appui contre le châssis cadre auxiliaire 16 comme illustré à la figure 4. Le moyen d'actionnement 46 de chaque système de bridage peut être actionné manuellement directement ou via un outillage spécifique pour que l'opérateur puisse rester à distance du châssis cadre auxiliaire 16.

Le moyen de blocage 44 de chaque système de bridage est bloqué contre le longeron 28 associé dudit cadre auxiliaire. Ainsi, la carrosserie 12 est retenue relativement au châssis cadre auxiliaire 16.

Dans l'exemple de réalisation qui vient d'être décrit, le moyen de blocage 44 de chaque système de bridage est mobile à rotation relativement à l'embase 42. Alternativement, il est possible de prévoir un montage mobile en translation du moyen de blocage relativement à l'embase comme cela est illustré aux figures 6 à 9 sur lesquelles les éléments identiques portent les mêmes références.

Dans cet exemple de réalisation, chaque système de bridage 40 comprend une embase 62 fixée au plancher 20 de la carrosserie, et un moyen de blocage 64 monté mobile transversalement en translation le long de l'embase entre une pluralité de positions inactives et une position active de blocage de la carrosserie relativement au châssis cadre auxiliaire 16. Chaque système de bridage 40 comprend également un moyen d'actionnement 66 pour permettre le déplacement du moyen de blocage 64. Le moyen d'actionnement 66 est situé sous le plancher 20. Autrement dit, le moyen d'actionnement 66 est décalé verticalement vers le bas par rapport au plancher 20.

L'embase 62 est pourvue intérieurement d'un logement 68 s'étendant transversalement et à l'intérieur duquel est monté le moyen de blocage 64 avec possibilité de translation. Le logement 68 est ouvert dans le sens transversal du côté du longeron 28 associé du châssis cadre auxiliaire.

Le moyen d'actionnement 66 s'étend transversalement. Le moyen d'actionnement 66 s'étend selon un axe d'allongement 70 transversal. Le moyen d'actionnement 66 s'étend ici transversalement en saillie vers l'extérieur par rapport à l'embase 62. Le moyen d'actionnement 66 s'étend transversalement en saillie vers l'extérieur par rapport à l'embase 42 en direction d'un des flancs 18 en restant en retrait par rapport audit flanc. Le moyen d'actionnement 66 est accessible depuis l'extérieur de la carrosserie. Le moyen d'actionnement 66 est monté mobile sur l'embase 42. Le moyen d'actionnement 66 est monté mobile sur l'embase le long de l'axe d'allongement 70.

Dans l'exemple de réalisation illustré, le moyen d'actionnement 66 est une vis filetée. Ainsi, le moyen d'actionnement 66 est ici mobile à rotation et en translation par rapport à l'embase 62. L'embase 62 de chaque système de bridage comprend un taraudage en prise avec le filetage du moyen d'actionnement 66. Un écrou 71 est aussi fixé sur l'embase 62 pour coopérer avec le filetage du moyen d'actionnement 66. Alternativement, il pourrait être possible de prévoir un seul de ces deux moyens.

L'extrémité libre du moyen d'actionnement 66, qui est située transversalement du côté du châssis cadre auxiliaire 16, est solidaire en translation du moyen de blocage 44. Le moyen d'actionnement 66 permet d'obtenir le coulissement du moyen de blocage 64 entre une pluralité de positions inactives (dont l'une est illustré aux figures 7 et 9) dans laquelle une surface de contact 64a du moyen de blocage reste à distance du châssis cadre auxiliaire 16, et une position active dans laquelle la surface de contact 64a du moyen de blocage est en appui contre le châssis cadre auxiliaire 16 comme illustré aux figures 6 et 8.

Dans la position active, la surface de contact 64a du moyen de blocage est en appui dans le sens vertical contre le longeron 28 associé du châssis cadre auxiliaire 16. Le moyen de blocage 64 est serré contre le longeron 28 associé. La surface de contact 64a vient en appui contre une aile latérale du longeron 28 associé. Le moyen de blocage 64 se présente sous la forme d'un coulisseau mobile en translation le long de l'axe 70.

Le moyen de blocage 64 présente une partie proximale 72 solidaire du moyen d'actionnement 66, une partie distale 74 pourvue de la surface de contact 64a et une partie de jonction 76 reliant les parties proximale 72 et distale 74. La partie de jonction 76 s'étend de manière oblique vers le haut à partir de la partie proximale 72. Comme illustré à la figure 8, la partie de jonction 76 est prévue pour venir en appui contre un pan 68a incliné de l'embase afin d'obtenir le contact entre le moyen de blocage 64 lors de son coulissement et le châssis cadre auxiliaire 16 et assurer la retenue de la carrosserie relativement audit châssis par serrage contre celui-ci.

Dans les exemples de réalisation illustrés, le moyen d'actionnement de chaque système de bridage est mobile en translation et en rotation pour obtenir le déplacement du moyen de blocage. Alternativement, le moyen d'actionnement pourrait être mobile en translation ou en rotation uniquement.

L'invention a été illustrée sur la base d'un véhicule routier de transport de marchandises du type porteur.

L'invention s'applique également à véhicule routier de transport de marchandises du type semi-remorque ou remorque. Un tel véhicule est équipé d'un châssis porteur du même type que le châssis 14 porteur décrit précédemment et la carrosserie est fixée au moyen des systèmes de bridage directement sur ce châssis porteur, c'est-à-dire sans interposition de châssis cadre auxiliaire.

## Revendications

1. Carrosserie de véhicule routier de transport de marchandises comprenant deux flancs (18) verticaux, un pavillon (19) et un plancher (20) assemblés entre eux et délimitant en partie un espace de chargement intérieur, et une pluralité de systèmes de bridage (40) fixés au plancher (20) verticalement du côté opposé à l'espace de chargement pour fixer la carrosserie à un châssis, chaque système de bridage (40) étant pourvu d'une embase (42 ; 62) fixée au plancher (20) de la carrosserie, et d'un moyen de blocage (44 ; 64) monté mobile sur l'embase entre au moins une position inactive et une position active de blocage de la carrosserie sur le châssis et pourvu d'une surface de contact (44a ; 64a) avec ledit châssis, **caractérisée en ce que** chaque système de bridage (40) est pourvu d'un moyen d'actionnement (46 ; 66) s'étendant transversalement, en contact avec le moyen de blocage (44 ; 64) et monté mobile sur l'embase pour permettre le déplacement de la position inactive vers la position active de blocage dudit moyen de blocage, et inversement.

2. Carrosserie selon la revendication 1, dans laquelle le moyen d'actionnement (46 ; 66) de chaque système de bridage s'étend selon un axe d'allongement (54, 70) transversal, le moyen d'actionnement (46 ; 66) étant monté mobile sur l'embase (42 ; 62) le long dudit axe d'allongement (54, 70).

3. Carrosserie selon la revendication 2, dans laquelle le moyen d'actionnement (46 ; 66) est monté mobile sur l'embase (42 ; 62) au moins en translation le long dudit axe d'allongement (54, 70).

4. Carrosserie selon l'une quelconque des revendications précédentes, dans laquelle le moyen de blocage (44) de chaque système de bridage est monté mobile à rotation sur l'embase (42) autour d'un axe (50) géométrique s'étendant longitudinalement.

5. Carrosserie selon l'une quelconque des revendications 1 à 3, dans laquelle le moyen de blocage (64) de chaque système de bridage est monté mobile transversalement en translation le long de l'embase (62).

6. Carrosserie selon l'une quelconque des revendications précédentes, dans laquelle le moyen d'actionnement (46 ; 66) de chaque système de bridage coopère avec l'embase (42 ; 62) par vissage.

7. Carrosserie selon l'une quelconque des revendications précédentes, dans laquelle le moyen d'actionnement (46 ; 66) de chaque système de bridage s'étend transversalement en saillie vers l'extérieur par rapport à l'embase (42 ; 62) en direction d'un des flancs (18) verticaux.

8. Carrosserie selon la revendication 7, dans laquelle le moyen d'actionnement (46 ; 66) de chaque système de bridage reste en retrait transversalement par rapport audit flanc (18) vertical.

9. Carrosserie selon l'une quelconque des revendications précédentes, dans laquelle le moyen d'actionnement (46 ; 66) est décalé verticalement vers le bas par rapport au plancher (20).

10. Véhicule routier de transport de marchandises comprenant un châssis (14) s'étendant longitudinalement et supportant au moins un essieu (15) équipé de roues, un châssis cadre auxiliaire (16) fixé sur le châssis (14) et une carrosserie (12) selon l'une quelconque des revendications précédentes fixée sur le châssis cadre auxiliaire (16).

11. Véhicule selon la revendication 10, dans lequel la surface de contact (44a ; 64a) du moyen de blocage de chaque système de bridage est, dans la position active de blocage, en contact contre un longeron (28) du châssis cadre auxiliaire.

12. Véhicule selon la revendication 11, dans lequel la surface de contact (44a ; 64a) du moyen de blocage de chaque système de bridage est, dans la position active de blocage, en contact contre une aile latérale dudit longeron (28) du châssis cadre auxiliaire.

13. Véhicule routier de transport de marchandises comprenant un châssis (14) s'étendant longitudinalement et supportant au moins un essieu (15) équipé de roues, et une carrosserie (12) selon l'une quelconque des revendications 1 à 9 fixée sur le châssis (14).

14. Véhicule selon la revendication 13, dans lequel la surface de contact (44a ; 64a) du moyen de blocage de chaque système de bridage est, dans la position active de blocage, en contact contre un longeron (24) du châssis.

15. Véhicule selon la revendication 14, dans lequel la surface de contact (44a ; 64a) du moyen de blocage de chaque système de bridage est, dans la position active de blocage, en contact contre une aile latérale dudit longeron (24) du châssis.

## Patentansprüche

1. Aufbau eines Straßenfahrzeugs für den Gütertransport, umfassend zwei vertikale Seitenwände (18), ein Dach (19) und einen Boden (20), die miteinander verbunden sind und einen inneren Laderaum teilweise begrenzen, und eine Vielzahl von Spannsystemen (40), die vertikal auf der dem Laderaum gegenüberliegenden Seite am Boden (20) befestigt sind, um den Aufbau an einem Fahrgestell zu befestigen, wobei jedes Spannsystem (40) mit einem Sockel (42; 62), der an dem Boden (20) der Karosserie befestigt ist, und ein auf dem Sockel zwischen mindestens einer inaktiven und einer aktiven Verriegelungsposition der Karosserie auf dem Fahrgestell beweglich montiertes Verriegelungsmittel (44; 64) und mit einer Kontaktfläche (44a; 64a) mit dem Fahrgestell versehen ist, **dadurch gekennzeichnet, dass** jedes Spannsystem (40) mit einem sich quer erstreckenden Betätigungsmittel (46; 66) versehen ist, das in Kontakt mit dem Verriegelungsmittel (44; 64) und beweglich auf dem Sockel montiert ist, um das Verschieben von der inaktiven Position in die aktive Verriegelungsposition des Verriegelungsmittels und umgekehrt zu ermöglichen.

2. Karosserie nach Anspruch 1, wobei sich das Betätigungsmittel (46; 66) jedes Spannsystems entlang einer quer verlaufenden Dehnungsachse (54, 70) erstreckt, wobei das Betätigungsmittel (46; 66) entlang der Dehnungsachse (54, 70) beweglich an der Basis (42; 62) montiert ist.

3. Karosserie nach Anspruch 2, wobei das Betätigungsmittel (46; 66) mindestens translatorisch entlang der Dehnungsachse (54, 70) beweglich an dem Sockel (42; 62) montiert ist.

4. Karosserie nach einem der vorhergehenden Ansprüche, wobei das Verriegelungsmittel (44) jedes Spannsystems drehbar auf dem Sockel (42) um eine sich längs erstreckende geometrische Achse (50) montiert ist.

5. Karosserie nach einem der Ansprüche 1 bis 3, wobei das Verriegelungsmittel (64) jedes Spannsystems quer verschiebbar entlang des Sockels (62) montiert ist.

6. Karosserie nach einem der vorhergehenden Ansprüche, wobei das Betätigungsmittel (46; 66) jedes Spannsystems durch Verschrauben mit dem Sockel (42; 62) zusammenarbeitet.

7. Karosserie nach einem der vorhergehenden Ansprüche, wobei sich das Betätigungsmittel (46; 66) jedes Spannsystems quer nach außen über den Sockel (42; 62) in Richtung einer der vertikalen Seitenwände (18) erstreckt.

8. Karosserie nach Anspruch 7, wobei das Betätigungsmittel (46; 66) jedes Spannsystems quer zu der senkrechten Seitenwand (18) zurückgesetzt bleibt.

9. Karosserie nach einem der vorhergehenden Ansprüche, wobei das Betätigungsmittel (46; 66) senkrecht nach unten zu dem Boden (20) versetzt ist.

10. Straßenfahrzeug für den Gütertransport, umfassend ein längs verlaufendes Fahrgestell (14), das mindestens eine Achse (15) mit Rädern trägt, ein an dem Fahrgestell (14) befestigtes Hilfsrahmenfahrgestell (16) und eine Karosserie (12) nach einem der vorhergehenden Ansprüche, die an dem Hilfsrahmenfahrgestell (16) befestigt ist.

11. Fahrzeug nach Anspruch 10, wobei die Kontaktfläche (44a; 64a) des Verriegelungsmittels jedes Spannsystems in der aktiven Verriegelungsposition an einem Längsträger (28) des Hilfsrahmenfahrgestells anliegt.

12. Fahrzeug nach Anspruch 11, wobei die Kontaktfläche (44a; 64a) des Verriegelungsmittels jedes Spannsystems in der aktiven Verriegelungsposition mit einem Seitenflügel des Längsträgers (28) des Hilfsrahmenfahrgestells in Kontakt ist.

13. Straßenfahrzeug für den Gütertransport, umfassend ein sich längs erstreckendes Fahrgestell (14), das mindestens eine Achse (15) mit Rädern trägt, und eine Karosserie (12) nach einem der Ansprüche 1 bis 9, die an dem Fahrgestell (14) befestigt ist.

14. Fahrzeug nach Anspruch 13, wobei die Kontaktfläche (44a; 64a) des Verriegelungsmittels jedes Spannsystems in der aktiven Verriegelungsposition mit einem Längsträger (24) des Fahrgestells in Kontakt ist.

15. Fahrzeug nach Anspruch 14, wobei die Kontaktfläche (44a; 64a) des Verriegelungsmittels jedes Spannsystems in der aktiven Verriegelungsposition mit einem Seitenflügel des Längsträgers (24) des Fahrgestells in Kontakt ist.

## Claims

1. Road vehicle body for transporting goods comprising two vertical sides (18), a roof (19) and a floor (20) assembled together and partially delimiting an interior loading space, and a plurality of clamping systems (40) attached to the floor (20) vertically on the side opposite the loading space to secure the body to a chassis, each clamping system (40) being provided with a base (42; 62) fastened to the floor (20) of the body, and a locking means (44; 64) mounted movable on the base between at least one inactive position and an active position of locking the body on the chassis and provided with a surface (44a; 64a) for contact with said chassis, **characterised in that** each clamping system (40) is provided with an actuation means (46; 66) extending transversely, in contact with the locking means (44; 64) and mounted movable on the base to allow moving from the inactive position to the active locking position of said locking means, and vice versa.

2. Body according to claim 1, wherein the actuating means (46; 66) of each clamping system extends along a transverse elongation axis (54, 70), the actuating means (46; 66) being movably mounted on the base (42; 62) along said elongation axis (54, 70).

3. Body according to claim 2, wherein the actuating means (46; 66) is mounted movable on the base (42; 62) at least in translation along said elongation axis (54, 70).

4. Body according to any one of the preceding claims, wherein the locking means (44) of each clamping system is mounted so as to be able to move on in rotation the base (42) about a geometric axis (50) extending longitudinally.

5. Body according to any one of claims 1 to 3, wherein the locking means (64) of each clamping system is mounted for transverse movement in translation along the base (62).

6. Body according to any one of the preceding claims, wherein the actuating means (46; 66) of each clamping system engages with the base (42; 62) by means of screws.

7. Body according to any one of the preceding claims, wherein the actuating means (46; 66) of each clamping system extends transversely projecting outward from the base (42; 62) towards one of the vertical sides (18).

8. Body according to claim 7, wherein the actuating means (46; 66) of each clamping system remains recessed transversely with respect to said vertical flank (18).

9. Body according to any one of the preceding claims, wherein the actuating means (46; 66) is offset vertically downwards with respect to the floor (20).

10. Road vehicle for transporting goods comprising a chassis (14) extending longitudinally and supporting at least one axle (15) fitted with wheels, an auxiliary frame chassis (16) secured to the chassis (14), and a body (12) according to any one of the preceding claims attached to the auxiliary frame chassis (16).

11. Vehicle according to claim 10, wherein the contact surface (44a; 64a) of the locking means of each clamping system is, in the active locking position, in contact against a longitudinal member (28) of the auxiliary frame chassis.

12. Vehicle according to claim 11, wherein the contact surface (44a; 64a) of the locking means of each clamping system is, in the active locking position, in contact against a side flange of said longitudinal member (28) of the auxiliary frame chassis.

13. Road vehicle for transporting goods comprising a chassis (14) extending longitudinally and supporting at least one axle (15) fitted with wheels, and a body (12) according to any one of claims 1 to 9 secured to the chassis (14).

14. Vehicle according to claim 13, wherein the contact surface (44a; 64a) of the locking means of each clamping system is, in the active locking position, in contact against a longitudinal member (24) of the frame.

15. Vehicle according to claim 14, wherein the contact surface (44a; 64a) of the locking means of each clamping system is, in the active locking position, in contact against a side's flange of said longitudinal member (24) of the chassis.
